# Europäisches Patentamt
# European Patent Office
# Office européen des brevets

(19)

(11) Veröffentlichungsnummer: **0 107 796**
**B1**

(12) # EUROPÄISCHE PATENTSCHRIFT

(45) Veröffentlichungstag der Patentschrift:
**22.07.87**

(51) Int. Cl.⁴: **G 02 B 6/44, H 01 B 7/34**

(21) Anmeldenummer: **83109660.7**

(22) Anmeldetag: **28.09.83**

(54) Flammwidriges optisches Nachrichtenkabel.

(30) Priorität: 01.10.82 DE 3236395

(43) Veröffentlichungstag der Anmeldung:
09.05.84 Patentblatt 84/19

(45) Bekanntmachung des Hinweises auf die Patenterteilung:
22.07.87 Patentblatt 87/30

(84) Benannte Vertragsstaaten:
AT CH DE FR GB IT LI NL

(56) Entgegenhaltungen:
EP-A-0 017 609
BE-A-868 828
DE-A-2 801 542
DE-B-2 626 070

(73) Patentinhaber: AEG KABEL Aktiengesellschaft,
Bonnenbroicher Strasse 2-14, D-4050
Mönchengladbach 2 (DE)

(72) Erfinder: Haag, Helmut Dipl.- Phys., Römerstrasse
30, D-4056 Waldniel (DE)
Erfinder: Ivanfy, Bartholomeus, Dipl.- Ing.,
Strippchenshof 24, D-4330 Mühlheim 1 (DE)
Erfinder: Mayer, Hans A., Dipl.- Ing.,
Saarnerstrasse 50, D-4330 Mühlheim 13 (DE)
Erfinder: Parmar, Daljit S., Dipl.- Ing., Vier
Eichenhöhe 10, D-3400 Essen 1 (DE)

(74) Vertreter: Vogl, Leo, Dipl.- Ing., Licentia Patent-
Verwaltungs- G.m.b.H. Theodor- Stern- Kai 1,
D-6000 Frankfurt 70 (DE)

EP 0 107 796 B1

**Beschreibung**

Die Erfindung bezieht sich auf ein optisches Nachrichtenkabel, das flammwidrig ist und mit wenigstens einer für die Nachrichtenübertragung geeigneten Faser versehen ist, wobei die optische Faser von einem Mantel aus Kunststoff umgeben ist und das Kabel Halterungs- und/oder Zugentlastungsarmierungen enthält.

Es sind Kabel dieser art bekannt, die nicht flammwidrige Komponenten wie Polyäthylen, Polypropylen, Wolle oder dgl. enthalten. Andererseits sind derartige Kabel bereits auch mit flammwidrigen, jedoch halogenhaltigen Materialien ausgerustet worden, beispielsweise mit einem Kabelmantel aus Polyvinylchlorid (z.B. DE-A- 26 28 070).

Durch die Europäische Anmeldung EP-A-00 17 609 ist bekannt, ein elektrisches oder optisches Kabel im Brandfall gegen Hitzeeinwirkung dadurch zu schützen, daß ein Innenmantel vorgesehen ist, der im Brandfall aufschäumt. Hierzu ist das Kunststoffmaterial des Innenmantels mit einem Fullstoff angereichert, der veresterbare Hydroxylgruppen aufweist, ferner mit einem im Brandfall Säure abspaltenden Katalysator und einem Treibmittel. Insgesamt erreicht der Füllstoff noch keine 50 % Gewichtsanteile bezogen auf die Gesamtmischung. Die Tatsache, daß im Brandfall Säuren abgespalten werden, kann für das Kabel und seine Funktion schädlich sein.

Die Tatsache, daß der Außenmantel ungefüllt ist, führt dazu, daß der gesamte Kabelaufbau nicht als flammwidrig anzusehen ist, da die innere Konfiguration im Brandfall nicht ausreichend geschützt ist, da der Außenmantel wegtropft und der Innenmantel selbst nicht stabil genug ist.

Aus der Deutschen Offenlegungsschrift DE-A-28 01 542 ist ein elektrisches Kabel bekannt, bei dem die isolierten Leiter von einer Einbettungsschicht und einer Ummantelung aus einem Material geringerer Entflammbarkeit umgeben sind. Die Einbettungsschicht besteht aus einem Alkenhomopolymer und mindestens 55 % eines Mineralfüllmittels. Der Kunststoffmantel enthalt mindestens 55 % des inerten Mineralfüllmittels und andere herkömmliche Bestandteile. Der Nachteil dieses Kabels besteht darin, daß es Weichmacher enthält, die im Brandfall zu einer Tropfneigung trotz hohen Mineralfüllgrades führen.

Bei nicht flammwidrige Bauteile aufweisenden Kabeln besteht die Gefahr, daß die Kabel im Brandfall ebenfalls in Brand geraten. Im Falle der Verwendung von halogenhaltigen Materialien werden korrosive Zersetzungsprodukte freigesetzt, und im Brandfall kommt es zu starker Rauchbildung und zur Abspaltung korrosiver Gase. Solche Kabel, z.B. mit PVC, haben außerdem keine oder keine ausreichenden Notlaufeigenschaften, da PVC im Brandfall tropft; härtere Brandtests wie Bündeltests in Schachtofen werden damit nicht bestanden.

Es ist Aufgabe der Erfindung, ein optisches Nachrichtenkabel zu schaffen das im Brandfall äußerst widerstandsfähig und nichttropfend ist und das in einem solchen Fall keine nennenswerten korrosiven Gase abspaltet.

Diese Aufgabe ist erfindungsgemäß dadurch gelöst, daß der Fasermantel, die Halterungs- und/oder Zugentlastungsarmierungen und der Kabelaußenmantel aus einem halogenfreien, im Brandfall nicht tropfenden flammwidrig gefüllten unvernetzten Polyolefincopolymergemisch mit flexiblen Eigenschaften bestehen, wobei die flammwidrigen Füllstoffe aus 120 - 600 Teilen Metalloxydhydrat auf 100 Teile Polymer bestehen.

Nach der Erfindung konzipierte Kabel haben Notlaufeigenschaften, die den einschlägigen Vorschriften gerecht werden. Das heißt, sie ermöglichen optische Übertragungen über einen Zeitraum von 20 Minuten, vorzugsweise 60 Minuten bzw. 180 Minuten im Test bei 800°C. Außerdem bestehen sie auch härtere Brandtests, das heißt, vertikale Bündeltests in Schachtöfen.

Als halogenfreie flammwidrige Materialien eignen sich beispielsweise flammwidrige EVA-Copolymere, Ethylen-Butylacrylat (EBA) oder Ethylen-Ethylacrylat (EEA) mit Zusätzen von anderen Polymeren und von im Brandfall Wasser abspaltenden Metalloxyden wie $Al(OH)_3$ und $Mg(OH)_2$, gegebenenfalls auch von Inertgas $(CO_2, N_2)$ abspaltenden Substanzen wie den Metallcarbonaten $MgCO_3$ und $CaCO_3$.

Es können selbstverständlich auch andere bzw. weitere Zusätze verwendet werden, zum Beispiel Alterungsschutzmittel, anorganische und organische Füllstoffe, Pigmente, Gleitmittel etc.

Die Mischungen enthalten von 120 bis 600 Teile, vorzugsweise 180 bis 300 Teile Metalloxydhydrate, auf 100 Teile Polymere. Sie sind unvernetzt thermoplastisch.

Der aus einem solchen Material bestehende Fasermantel kann dabei fest auf die optische Faser bzw. Fasern aufgebracht oder lose auf diese aufextrudiert sein.

Die Erfindung wird im nachstehenden anhand zweier beispielsweiser Kabelkonzeptionen erläutert. Es zeigen:

Fig. 1 einen Querschnitt durch ein Lichtwellenleiterkabel mit einer Haltewendel und einem Zugentlastungsband,

Fig. 2 einem Querschnitt durch ein LWL-Kabel mit strangförmigen Zugentlastungen.

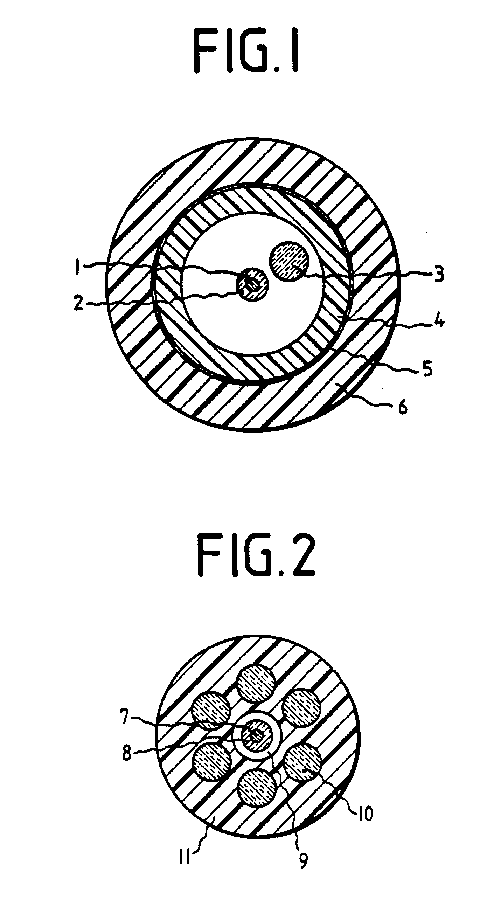

Beim optischen Kabel gemäß Fig. 1 ist die Glasfaser 1 mit einer durch einen Schlauch aus einem flammwidrigen und halogenfreien Polyolefin-Copolymergemisch verkörperten Ummantelung 2 versehen.

Die Haltewendel 3 besteht aus einer gespannten Mineralwolle-Glasseide-Kombination, die ebenfalls flammwidrig und halogenfrei ist. Die Haltewendel 3 kann beispielsweise auch aus auf Aluminiumoxyd basierenden Keramikfasern oder ähnliche Materialien hergestellt sein. Haltewendel 3 und Glasfaser 1 einschließlich deren Ummantelung 2 sind von einem Kunststoffschlauch 4 umschlossen, dessen Ausgangsmaterial ebenfalls auf einem flammwidrigen und halogenfreien Polyolefincopolymergemisch basiert.

Auf den Kunststoffschlauch 4 folgt ein diesen konzentrisch umgebendes Zugentlastungsband 5 aus einem glasfaserverstärkten Kunststoff, der ebenfalls flammwidrig und halogenfrei ist. Der äußere, das Zugentlastungsband 5 umgebende Kabelmantel 6 ist ein Kunststoffmantel aus einem flammwidrigen und halogenfreien Polyolefincopolymergemisch.

Es ist ersichtlich, daß ein optisches Nachrichtenkabel dessen einzelne Bauteile aus den im vorstehenden genannten Materialien hergestellt sind, im Brandfall äußerst widerstandsfähig ist. Daher bietet sich die Verwendung solcher Kabel vor allem in Eisenbahnzügen, in Tunneln sowie in Gebäuden an.

Das in Fig. 2 dargestellte optische Kabel enthält einen Lichtwellenleiter in Form einer Glasfaser 7 ohne Kunststoffhülle. Die halogenfreie, flammwidrige Schicht 8 ist hier unmittelbar und fest auf die Faser 7 aufgebracht. Die Glasfaser 7 mit der Beschichtung 8 ist von einem Kunststoffschlauch 9 aus einem flammwidrigen Polyolefincopolymergemisch umgeben.

Konzentrisch zum Schlauch 9 sind Zugentlastungsstränge 10 aus Glasseide und/oder Mineralwolle oder auf aus Aluminiumoxyd basierenden Keramikfasern angeordnet. Der äußere Kabelmantel 11 besteht aus einem flammwidrigen Polyolefincopolymergemisch mit Metallhydroxyden und einem oder mehreren der im vorstehenden beschriebenen Zusätze.

Optische Nachrichtenkabel nach der Erfindung sind wegen ihrer besonders guten Notlaufeigenschaften im Brandfall universell einsetzbar, insbesondere erübrigt sich die Beachtung spezieller Vorsichtsmaßnahmen.

## Patentansprüche

1. Flammwidriges optisches Nachrichtenkabel mit wenigstens einer für die optische Nachrichtenübertragung geeigneten Faser, wobei die optische Faser von einen Mantel aus Kunststoff umgeben ist und das Kabel Halterungs- und/oder Zugentlastungsarmierungen enthält, dadurch gekennzeichnet, daß der Fasermantel (2), die Halterungs- und/oder Zugentlastungsarmierungen (3, 4, 5) und der Kabelaußenmantel (6) aus einem halogenfreien, im Brandfall nicht tropfenden flammwidrig gefüllten unvernetzten Polyolefincopolymergemisch mit flexiblen Eigenschaften bestehen wobei die flammwidrigen Füllstoffe aus 120 - 600 Teilen Metalloxydhydrat auf 100 Teile Polymer bestehen.

2. Flammwidriges optisches Nachrichtenkabel nach Anspruch 1, gekennzeichnet durch die Aluminiumoxydhydrat und/oder Magnesiumhydroxyd als flammwidrige Füllstoffe.

3. Flammwidriges optisches Nachrichtenkabel nach einem der Ansprüche 1 oder 2, gekennzeichnet durch die Verwendung von weiteren, im Brandfall Inertgas, z.B. $N_2$, $CO_2$, abspaltenden Füllstoffen.

4. Flammwidriges optisches Nachrichtenkabel nach Anspruch 3, dadurch gekennzeichnet, daß als Inertgas abspaltende Füllstoffe Magnesiumkarbonat und/oder Kalziumkarbonat verwendet werden.

5. Flammwidriges optisches Nachrichtenkabel nach einem der Ansprüche 1 bis 4 gekennzeichnet durch die Verwendung eines oder mehrerer Ethylen-Vinylacetat (EVA)-Copolymere.

6. Flammwidriges optisches Nachrichtenkabel nach einem der Ansprüche 1 bis 4, gekennzeichnet durch die Verwendung von Ethylenbutylacrylat (EBA) und/ oder Ethylenethylacrylat (EEA) allein oder in Abmischung.

7. Flammwidriges optisches Nachrichtenkabel nach einem der Ansprüche 1 bis 6, dadurch gekennzeichnet daß der aus halogenfreiem, flammwidrigem Material bestehende Mantel der optischen Faser fest auf die Faser aufgebracht ist.

8. Flammwidriges optisches Nachrichtenkabel nach einem der Ansprüche 1 bis 6, dadurch gekennzeichnet, daß der aus halogenfreiem, flammwidrigem Material bestehende Mantel der optischen Faser lose auf die Faser aufextrudiert ist.

9. Flammwidriges optisches Nachrichtenkabel nach einem der Ansprüche 1 bis 8, dadurch gekennzeichnet, daß es eine Haltewendel aus gesponnener Mineralwolle/Glasseide aufweist.

10. Flammwidriges optisches Nachrichtenkabel nach Anspruch 9, dadurch gekennzeichnet, daß die Haltewendel aus auf Aluminiumoxyd basierenden Keramikfasern hergestellt ist.

11. Flammwidriges optisches Nachrichtenkabel nach einem der Ansprüche 1 bis 8, dadurch gekennzeichnet, daß es Zugentlastungsstränge aus glasfaserverstärktem Kunststoff aufweist.

12. Flammwidriges optisches Nachrichtenkabel nach Anspruch 11, dadurch gekennzeichnet, daß als Material für die Zugentlastungsstränge auf Aluminiumoxyd basierende Keramikfasern gewählt sind.

## Claims

1. An optical fire-resistant communication cable having at least one fibre suitable for optical communication, the optical fibre being surrounded by a sheath of plastics material and the cable containing supporting and/or stress relief reinforcements, characterised in that the fibre sheath (2), the supporting and/or strength reinforcements (3, 4, 5) and the outer cable sheathing (6) consist of a halogenfree, non-crosslinked polyolefin copolymer mixture with flexible properties which does not drip in the event of fire and is filled in a flame-resistant manner, the flame-resistant fillers consisting of 120 - 600 parts of metal hydroxide to 100 parts of polymer.

2. An optical fire-resistant communication cable as claimed in Claim 1, characterised by the use of aluminium hydroxide and/or magnesium hydroxide as flame-resistant fillers.

3. An optical fire-resistant communication cable as claimed in Claim 1 or 2, characterised by the use of further fillers which split off inert gas, for example $N_2$, $CO_2$, in the event of fire.

4. An optical fire-resistant communication cable as claimed in Claim 3, characterised in that magnesium carbonate and/or calcium carbonate are used as fillers splitting off inert gas.

5. An optical fire-resistant communication cable as claimed in any of Claims 1 to 4, characterised by the use of one or more ethylene/vinyl acetate (EVA) copolymers.

6. An optical fire-resistant communication cable as claimed in any of Claims 1 to 4, characterised by the use of ethylene/butyl acrylate (EBA) and/or ethylene/ethyl acrylate (EEA) alone or in a mixture.

7. An optical fire-resistant communication cable as claimed in any of Claims 1 to 6, characterised in that the sheath, consisting of halogen-free, flame-resistant material, of the optical fibre is fixed to the fibre.

8. An optical fire-resistant communication cable as claimed in any of Claims 1 to 6, characterised in that the sheath, consisting of halogen-free, flame-resistant material, of the optical fibre is extruded loose on the fibre.

9. An optical fire-resistant communication cable as claimed in any of Claims 1 to 8, characterised in that it comprises a reinforcing helix of spun mineral wool/glass fibre.

10. An optical fire-resistant communication cable as claimed in Claim 9, characterised in that the reinforcing helix is produced from ceramic fibres based on aluminium oxide.

11. An optical fire-resistant communication cable as claimed in any of Claims 1 to 8, characterised in that it comprises stress relief strands of plastics material reinforced with glass fibre.

12. An optical fire-resistant communication cable as claimed in Claim 11, characterised in that ceramic fibres based on aluminium oxide are selected as material for the strength strands.

**Revendications**

1. Câble de télécommunication optique, comportant au moins une fibre convenant à la transmission optique de messages, la fibre optique étant entourée d'un revêtement de matière synthétique et le câble contenant des armures de maintien et/ou de décharge de traction, caractérisé en ce que le revêtement (2) de la fibre, les armures de maintien et/ou de décharge de traction (3, 4, 5) et la gaine externe (6) du câble sont formés d'un mélange de copolymères de polyoléfines, mélange qui est exempt d'halogène, n'est pas réticulé, ne forme pas de gouttes en cas d'incendie, comporte des charges d'ignifugeage et possède des propriétés de flexibilité, les charges ignifuges étant composées de 120 - 600 parties d'hydrate d'oxyde métallique pour 100 parties de polymère.

2. Câble selon la revendication 1, caractérisé par l'utilisation d'hydrate d'oxyde d'aluminium et/ou d'hydroxyde de magnésium comme charges ignifuges.

3. Câble selon la revendication 1 ou 2, caractérisé par l'utilisation d'autres charges, dégageant un gaz inerte, tel que $N_2$, $CO_2$, en cas d'incendie.

4. Câble selon la revendication 3, caractérisé en ce que l'on utilise du carbonate de magnésium et/ou du carbonate de calcium comme charges dégageant un gaz inerte.

5. Câble selon l'une des revendications 1 à 4, caractérisé par l'utilisation d'un ou plusieurs copolymères d'éthylène-acétate de vinyle.

6. Câble selon l'une des revendications 1 à 4, caractérisé par l'utilisation d'éthylène-acrylate d'éthyle, seul ou en combinaison.

7. Câble selon l'une des revendications 1 à 6, caractérisé en ce que le revêtement de la fibre optique, formé d'un matériau ignifuge exempt d'halogène, est disposé fixe sur la fibre.

8. Câble selon l'une des revendications 1 à 6, caractérisé en ce que le revêtement de la fibre optique, formé d'un matériau ignifuge exempt d'halogène, est extrudé librement sur la fibre.

9. Câble selon l'une des revendications 1 à 8, caractérisé en ce qu'il contient une hélice de maintien filée de laine minérale/soie de verre.

10. Câble selon la revendication 9, caractérisé en ce que l'hélice de maintien est fabriquée de fibres céramiques à base d'oxyde d'aluminium.

11. Câble selon l'une des revendications 1 à 8, caractérisé en ce qu'il contient des cordes de décharge de traction en matière synthétique renforcée par des fibres de verre.

12. Câble selon la revendication 11, caractérisé en ce que les cordes de décharge de traction sont réalisées de fibres céramiques à base d'oxyde d'aluminium.

# FIG.1

# FIG.2